# EUROPEAN PATENT SPECIFICATION

(11) **EP 4 645 184 B1**
(45) Date of publication and mention of the grant of the patent: **04.11.2026**
(21) Application number: 24174232.9
(22) Date of filing: 03.05.2024
(51) Int. Cl.: G06Q 10/08

(54) **COMPUTER-IMPLEMENTED METHOD FOR PROCESSING A MATERIAL FLOW HANDLING OPERATION**
COMPUTERIMPLEMENTIERTES VERFAHREN ZUR VERARBEITUNG EINES MATERIALFLUSSHANDHABUNGSVORGANGS
PROCÉDÉ MIS EN UVRE PAR ORDINATEUR POUR TRAITER UNE OPÉRATION DE GESTION DE FLUX DE MATÉRIAU

(43) Date of publication of application: 05.11.2025
(73) Proprietor: AutoStore Technology AS, 5578 Nedre Vats (NO)
(72) Inventor: Cook, Steinar Overbeck, 5578 Nedre Vats (NO)
(74) Representative: Kilburn & Strode LLP

(56) References cited:
- WO-A1-2009/035694
- XIAOFENG FU ET AL: "Vehicles routing and scheduling algorithm for an automated storage and retrieval system of a warehouse", 2015 INTERNATIONAL CONFERENCE ON LOGISTICS, INFORMATICS AND SERVICE SCIENCES (LISS), IEEE, 27 July 2015 (2015-07-27), pages 1 - 6, XP032839820, DOI: 10.1109/LISS.2015.7369603

## Description

### TECHNICAL FIELD

The disclosure relates to a computer-implemented method for processing a material flow handling operation. More particularly, it relates to a computer-implemented method for processing a material flow handling operation in a warehouse comprising an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Orders that are to be processed using an automated storage and retrieval system are generally received at a warehouse management system (WMS). In current systems, the WMS is software that receives the order and translates the order into tasks that are to be carried out in the automated storage and retrieval system in order for the order to be fulfilled.

Typically, the integration of the WMS with the automated storage and retrieval system has been implemented by brute-force integration. In other words, the integration between the WMS and the automated storage and retrieval system has been hard-coded into the WMS. Integrating the WMS with the automated storage and retrieval system is an expensive and time consuming process. In particular, integrating the WMS with the automated storage and retrieval system requires in depth knowledge at the WMS of the semantics and low-level concepts of the automated storage and retrieval system (for example, knowledge of how bins are retrieved from the grid and delivered to ports so that goods can be picked).

An issue with hard-coding the integration between the WMS and the automated storage and retrieval system is that it is difficult to modify the material flow handling (MFH) process once the warehouse system (i.e., WMS and automated storage and retrieval system) is operational. This is because the risk of changing the integration between the WMS and the automated storage and retrieval system is costly, time consuming (e.g., changes can take weeks or even months), and comes with a high risk of making errors. In particular, a modification to the MFH process often causes undesirable side effects, or introduces new bugs. A further issue is that changes can only be made by the supplier of the WMS. In summary, therefore, the difficulty in modifying the MFH process once the warehouse system is operational means that the warehouse is unable to accommodate necessary changes.

In addition, different warehouse operators tend to have different MFH requirements. Tailoring a MFH process to a particular warehouse operator is costly, time consuming, and inflexible. One option for allowing some flexibility in the MFH process is to implement a number of "parameters" that define how the MFH process operates. The parameter values can therefore be tailored to different warehouse operators, depending on their MFH requirements. One option for changing the MFH process once operational is to change one of the parameters defining how the MFH process operates. However, even a small number of parameters results in a combinatorial explosion in the number of variants of the MFH process. For example, implementing 16 binary parameters would result in 65536 variants of the MFH process. Testing such a high number of variants is almost impossible, meaning that modification of one or more parameters comes with a high risk of error. Therefore, the use of parameters does not allow the warehouse to accommodate necessary changes in the MFH process.

In many cases, warehouses also include other hardware components that are adjacent to the automated storage and retrieval system (in other words, hardware components that are used in a MFH process in conjunction with an automated storage and retrieval system). For example, a robot piece picker (RPP) may pick items out of containers retrieved from the grid and transfer the picked items into totes or boxes. In another example, a conveyor may transport totes or boxes from a port to a different location within the warehouse. Items, totes or boxes may also be transported by automated guided vehicles (AGVs) or autonomous mobile robots (AMRs).

Where a warehouse includes hardware components that are adjacent to the automated storage and retrieval system, the WMS also needs to integrate with such adjacent hardware components so that orders received at the WMS can be fulfilled. Again, the integration of the WMS with the adjacent hardware components is typically implemented by brute-force integration, meaning that new software needs to be written in order to integrate the hardware components with the other components of the warehouse system (e.g., the automated storage and retrieval system). This further increases the cost and complexity of integrating the WMS with the warehouse automation equipment, while increasing the difficulty of modifying the MFH process once operational. For example, it is difficult for a warehouse operator to replace an operational RPP with a different type of RPP with different functionality, because the integration with the operational RPP is hard-coded into the WMS.

WO 2009/035694 A1 describes a facility wide sorting and/or sequencing system for improving product processing operations and, more particularly, a facility wide system and related functionality for simultaneously sorting and sequencing mixed mail pieces such as, for example, flats and letter mail pieces. The flats and letter mail pieces are placed in frames so that all types of mail pieces can be sorted and/or sequenced simultaneously through merging and diverting a stream of filled trays into and out of different streams at a full or substantially full transport speed.

Fu, X. et al, "Vehicles Routing and Scheduling Algorithm for an Automated Storage and Retrieval System of a Warehouse", 2015 International Conference on Logistics, Informatics and Service Sciences (LISS), 27 July 2015, pages 1-6 describes that in order to organise multiple vehicles moving orderly in the system, offline vehicle routing and online vehicle scheduling are performed, based on a path-net graph modelled from the racks and pallet lifters of the system. In offline vehicle routing, path payload and navigation factor are introduced to calculate the path cost, which can make the vehicles not only have short paths but also employ trunk rails and pallet lifters evenly. In online vehicle scheduling, to avoid vehicle collisions at path nodes, buffers are attached to path nodes in the path-net graph model for vehicle parking, and each vehicle can only pass through the path nodes after having acquired the authorization of the system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a schematic diagram of a software environment for handling operations within a warehouse;
Fig. 6 shows a detailed schematic diagram of certain components of the software stack shown in Fig. 5;
Fig. 7 shows a simplified schematic diagram of a petri net mathematical model;
Fig. 8 shows a flowchart of a first method implemented by the operating system shown in Fig. 6;
Fig. 9 shows a flowchart of a second method implemented by the operating system shown in Fig. 6.

### DETAILED DESCRIPTION

In overview, the disclosure relates to a computer-implemented method for processing a material flow handling (MFH) operation in a warehouse comprising an automated storage and retrieval system. The method is carried out using one or more processors of one or more computing devices. The method comprises identifying an execution model associated with a workflow (i.e., a workflow of a MFH operation). The execution model identifies a plurality of tasks to be carried out in the warehouse in response to a workflow-initiating event. The execution model associates the plurality of tasks with the workflow-initiating event using a petri net model. The method further comprises executing the plurality of tasks using a plurality of cooperative threads executing in user space of the one or more computing devices.

The use of a petri net model for associating the plurality of tasks with the workflow-initiating event is particularly suitable for the high degree of concurrency present in warehouse systems (i.e., where multiple events and tasks occur concurrently). In addition, the use of cooperative threads (also called "green threads" or "local threads" allows for the concurrent execution of multiple tasks. Accordingly, the method allows for execution of MFH workflows with high degrees of concurrency.

The disclosure also relates to the use of a domain-specific language (DSL) that is specific to the warehouse domain (and specifically to a domain of a warehouse comprising an automated storage and retrieval system). In this way, the DSL can be written, understood, maintained and changed by the warehouse operator. The ability for warehouse operators to modify the script allows rapid changes in the MFH workflow to be implemented. In addition, the use of the warehouse-specific DSL allows modifications to be made to a script with greatly reduced monetary cost, time and risk (i.e., compared with modifications to source code used for hard-coded integration or modification of parameters).

### Automated storage and retrieval system overview

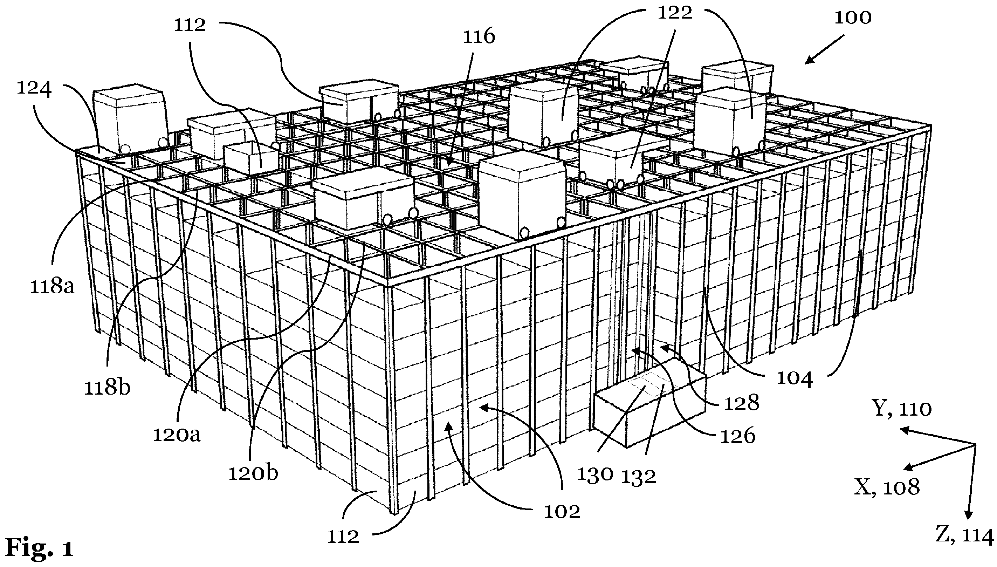

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

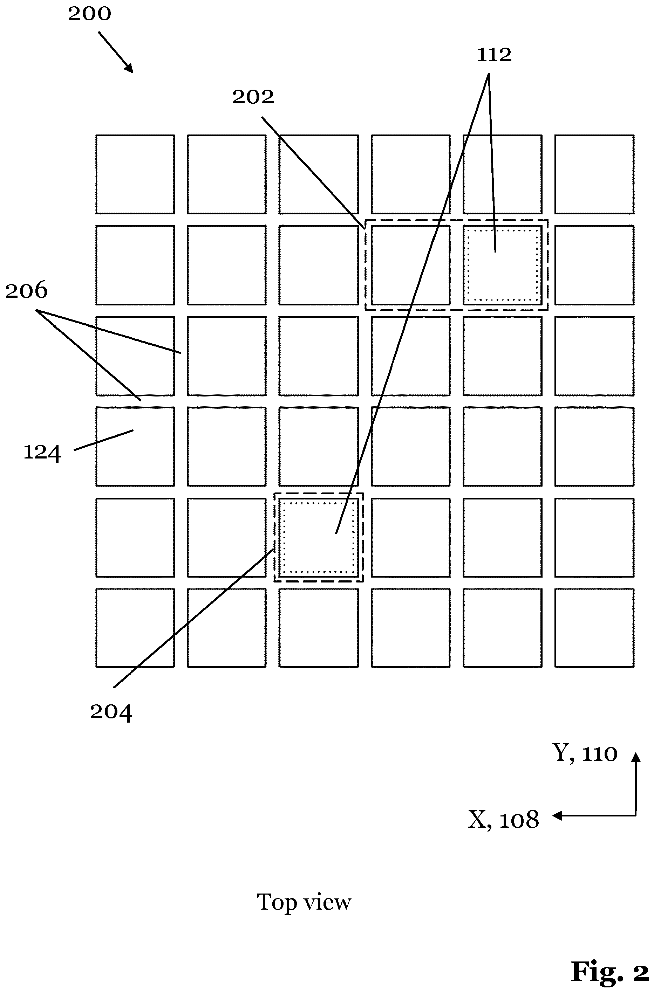

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

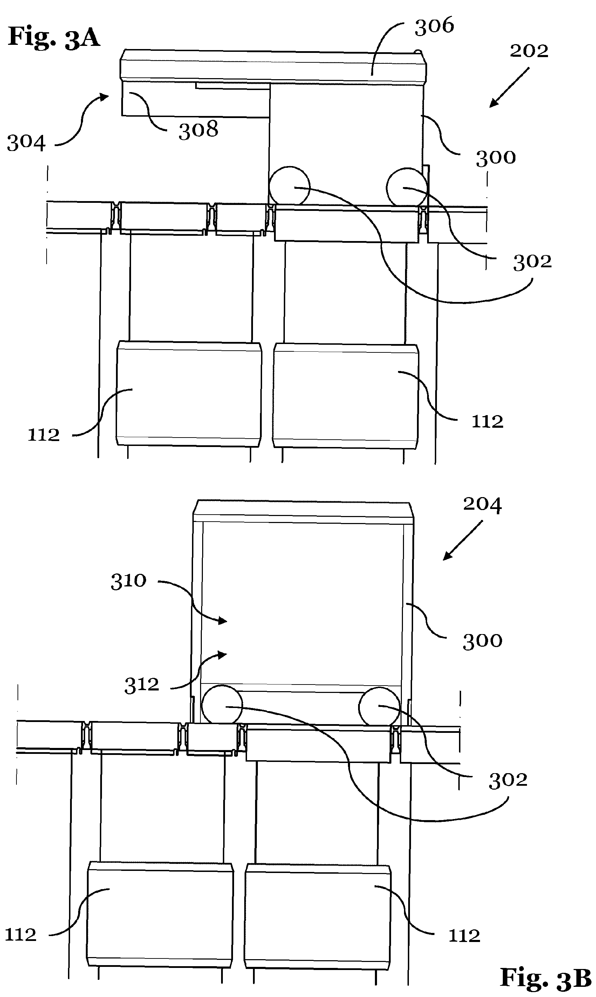

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

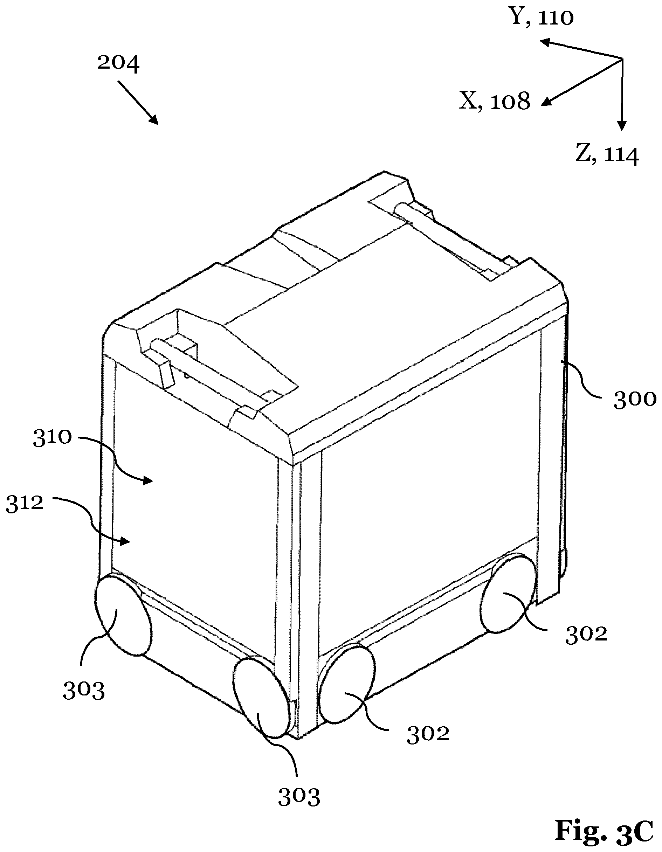

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

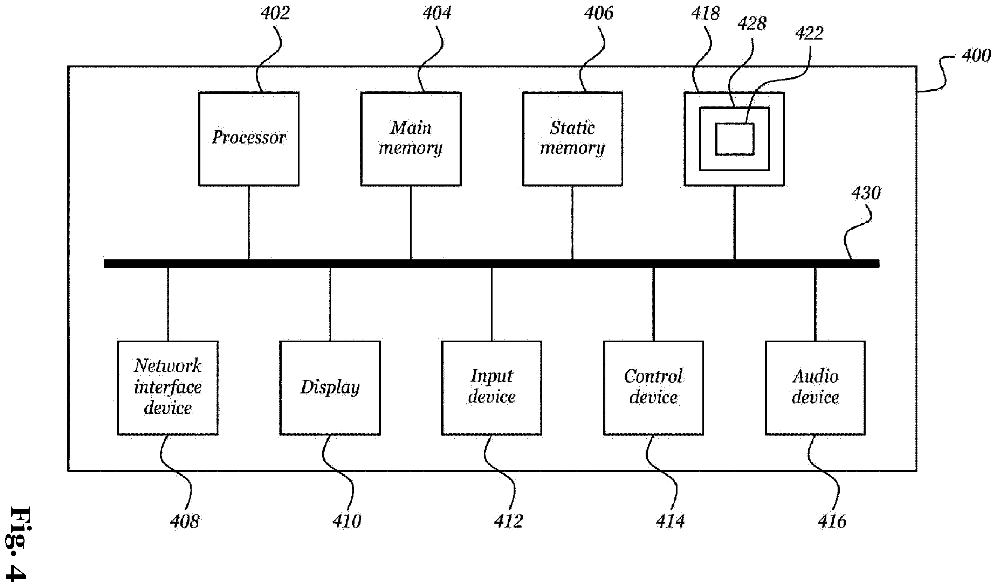

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Operating system overview

As explained above, a Warehouse Management System (WMS) typically includes software that receives an order and translates the order into tasks that are to be carried out in the automated storage and retrieval system. In order for the WMS to fulfil the order, the WMS requires knowledge of the tasks that can be carried out in the automated storage and retrieval system. In other words, the capability of the automated storage and retrieval system is hard-coded into the WMS.

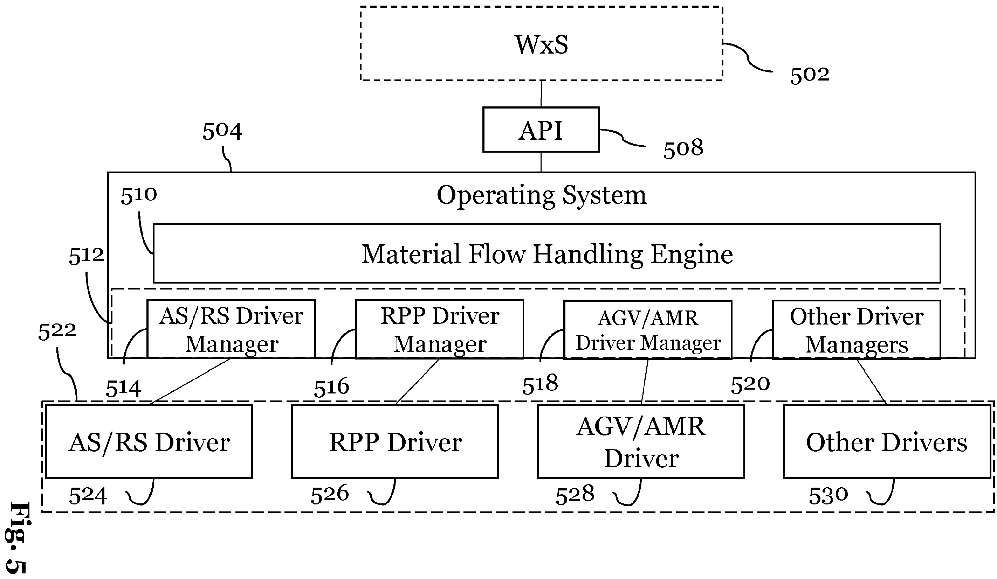

Fig. 5 is a schematic diagram of a software stack 500 showing the integration between a WxS 502, an operating system 504, and a plurality of device drivers 506 according to the present disclosure. The term "WxS" is intended to refer to one or more of: a Warehouse Management System, WMS; a Warehouse Execution System, WES; and a Warehouse Control System, WCS. The operating system 504 is a software layer (specific to the warehouse domain) that is implemented between the WxS 502 and the plurality of device drivers 506. The operating system 504 receives instructions from the WxS 502 in the form of an order, and provides instructions to the plurality of device drivers 506.

### Integration with WxS

In a simple example, a warehouse may include an automated storage and retrieval system ("AS/RS"), but no adjacent hardware components. In this case, the MFH process is carried out using the AS/RS only. As shown in Fig. 5, the operating system 504 receives instructions from the WxS 502 via an application programming interface (API) 508 (which may be, for example, an API of the operating system 504). The API 508 provides a constrained set of high-level abstractions for use by the WxS 502 in providing instructions to the operating system 504. In one example, the API 508 is implemented as a REST API. Specifically, the constrained set of abstractions provided by the API 508 is specific to the warehouse domain (i.e., does not include abstractions relating to out-of-warehouse processes), and includes higher level abstractions such as "order", "stock", "product" and "inventory", instead of lower level concepts specific to the AS/RS (e.g., "tasks", "task groups", "queues", etc.).

This means that the instructions received from the WxS 502 do not include specific instructions for hardware components of the AS/RS. For example, the instructions from the WxS 502 do not specify that a particular bin 112 is to be delivered to a particular port 130, 132. As another example, the instructions from the WxS 502 do not specify that a particular robot 202, 204 is to induct goods received at a particular port 130, 132. Instead, the operating system 504 identifies a plurality of tasks to be carried out in response to the high-level instructions received from the WxS 502.

For example, a WMS may currently receive an order, identify an order line, identify one or more bins 112 that the goods are located in, identify the quantity of goods in the identified bins 112, create tasks for retrieval of the bins and picking of the goods, collate the created tasks into a task group, instruct the AS/RS to retrieve a first bin and a second bin (for example), and provide commands for instructions to be displayed on screen for an operator to pick 30 items from the first bin and 10 items from the second bin. In contrast, the WxS 502 shown in Fig. 5 simply provides an order via the API 508 for 40 units of a particular item. The operating system 504 then converts the order into a number of tasks for the AS/RS to carry out. For example, the instructions received from the WxS 502 may simply be an order for a particular item (e.g., socks), rather than a specific instruction to deliver bin #329 (containing e.g., socks) to port #64 (e.g., as received from existing WMSs).

By implementing the operating system 504 and the API 508 with the constrained set of abstractions, the WxS 502 does not require in depth knowledge of the semantics of the AS/RS in order to process an order. Therefore, the integration of the WxS 502 and the AS/RS does not need to be hard coded into the WxS 502. In other words, the complexity of the underlying hardware is taken away from the WxS 502. Instead, the instructions received from the WxS 502 via the API 508 are translated by the operating system 504 into a plurality of tasks to be carried out within the warehouse.

### Device driver managers

As shown in Fig. 5, the operating system 504 includes a material flow handling (MFH) engine 510, described in further detail below, and one or more device driver managers 512. Continuing the simple example identified above, the one or more device driver managers 512 includes AS/RS driver manager 514. Each of the one or more device driver managers 512 manages one or more device drivers 522. Therefore, the AS/RS driver manager 514 interfaces with an AS/RS driver 524 that controls the AS/RS hardware (e.g., the ports 130, 132, robots 202, 204, etc.).

It can be seen from Fig. 5 that the operating system 504 includes a number of other device driver managers 512. Each of the other device driver managers 512 is specific to a particular class of hardware component operating adjacent to the AS/RS. As used herein, the term "adjacent" refers to hardware components that carry out material flow handling operations in conjunction with the AS/RS. For example, a RPP may pick one or more items out of a bin 112 at a port 130, 132 of an AS/RS. As another example, a conveyor, AGV or AMR may move a container or tote holding items picked from bins 112 of the AS/RS from a first location in the warehouse to a second location in the warehouse.

The device driver managers 512 that are implemented in the operating system 504 are dependent on the adjacent hardware components used in the warehouse. For example, the operating system 504 may include a robot piece picker (RPP) driver manager 516, an automated guided vehicle (AGV) or autonomous mobile robot (AMR) driver manager 518, and one or more other driver managers 520 (e.g., driver managers for other adjacent hardware components, such as conveyors, or machines for opening, closing or weighing containers or totes). One or more of these device driver managers 512 may not be implemented if fewer adjacent hardware components are used in the MFH process.

As mentioned above, each device driver manager 512 manages one or more device drivers 522. In the example shown in Fig. 5, the robot piece picker (RPP) driver manager 516 interfaces with one or more RPP drivers 526 that control respective RPPs operating adjacent to the AS/RS. The AGV/AMR driver manager 518 interfaces with one or more AGV/AMR drivers 528 that control respective AGVs and/or AMRs adjacent to the AS/RS. The other device driver managers 520 interface with other drivers 530 that control other hardware components (e.g., conveyors) adjacent to the AS/RS. The device drivers 522 may be executed on the same one or more computing devices as those that execute the operating system 504, but may be separate to the operating system 504 for security reasons. In one example, communication between the driver managers 512 and the respective device drivers 522 may be carried out using TCP/IP.

A device driver of a hardware component is typically a software program for controlling operation of the hardware component. The device driver is generally written by the OEM (i.e., the manufacturer of the hardware component). The device drivers 522 shown in Fig. 5 are dependent on the class of hardware that they are associated with. For example, the syntax and semantics for controlling operation of a RPP differ from the syntax and semantics for controlling operation of a conveyor. The hardware components operating adjacent to the AS/RS are generally produced by third-party manufacturers, which may be different to one another. For example, a RPP and an AGV may be produced by different third-party manufacturers and will have distinct device drivers.

Each of the device drivers 522 uses a different set of abstractions for interfacing with the operating system 504 (i.e., with their associated device driver manager 512). The set of abstractions used by each device driver 522 is dependent on the class of hardware component that the device driver 522 is associated with. For example, a device driver 526 for an RPP is associated with a particular class of hardware component (i.e., RPPs) and will therefore use a different set of abstractions to that used by a device driver 528 for an AGV or AMR, which is associated with a different class of hardware component (i.e., AGVs and AMRs). The set of abstractions used by the device drivers 522 is constrained and pre-specified (e.g., by the provider of the operating system 504). By using a constrained set of abstractions specified by the operating system 504, compatibility of each device driver 522 with the operating system 504 is ensured. In addition, the use of the constrained set of abstractions means that the need for detailed semantic knowledge of the hardware components themselves at the operating system 504 is eliminated.

### Integration with automation equipment

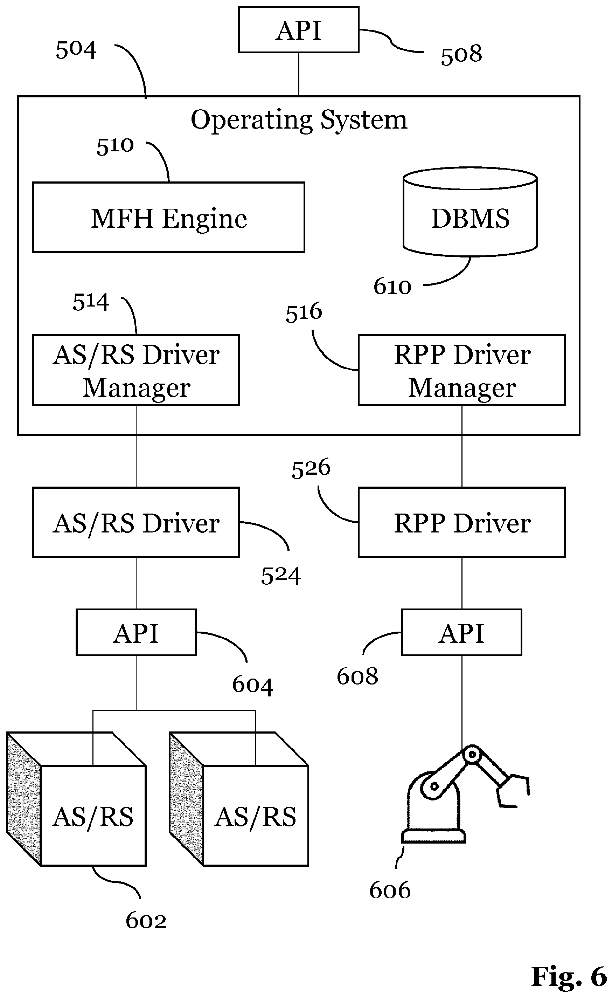

Fig. 6 shows the interface between the operating system 504 and the automation equipment in the warehouse in more detail. In the example shown in Fig. 6, the automation equipment includes one or more instances of AS/RS hardware 602 (i.e., the grid 100, robots 202, 204, ports 130, 132, etc. of each AS/RS instance) and a RPP 606. Specifically, two instances of AS/RS hardware 602 are shown, corresponding to two grids 100 present within the warehouse.

As shown in Fig. 6, the AS/RS driver 524 communicates with the AS/RS hardware instances 602. Specifically, the AS/RS driver 524 translates instructions from the AS/RS driver manager 514 into commands (i.e., low-level commands) for controlling the operation of the AS/RS hardware 602 (e.g., ports 130, 132, robots 202, 204, etc.). The AS/RS driver 524 communicates with the AS/RS hardware instances 602 via an API 604. As shown in Fig. 6, the AS/RS driver 524 may communicate with multiple AS/RS hardware instances 602 via the API 604. This allows the operating system to issue commands across multiple AS/RS hardware instances 602 within the same warehouse. The AS/RS driver 524 uses abstractions specific to the AS/RS hardware 602, such as "port" and "bin".

By using the AS/RS driver 524 to communicate with the AS/RS hardware 602, the operating system 504 does not require detailed semantic knowledge of the AS/RS hardware 602.

As mentioned above, the RPP driver manager 516 interfaces with one or more RPP drivers 526 (for clarity, only one RPP driver 526 is shown in Fig. 6). The RPP driver 526 translates instructions from the RPP driver manager 516 into commands (i.e., low-level commands) for controlling the operation of the RPP 606. The RPP driver 526 communicates with the RPP 606 via a further API 608 (e.g., using gRPC or similar). Accordingly, different APIs (i.e., APIs 604, 608) are used for communication with different classes of automation equipment (specifically, the AS/RS hardware instances 602 and the RPP 606).

The AS/RS driver 524 uses a first set of abstractions that is different to a second set of abstractions used by the RPP driver 526. As explained above, the AS/RS driver 524 uses abstractions specific to the AS/RS hardware 602, such as "port" and "bin". On the other hand, the RPP driver 526 may use abstractions specific to the RPP 606, such as a "pick zone" (or "source area") defined by physical coordinates, and a "placement zone" (or "sink area") defined by physical coordinates. The RPP driver 526 may also be required to specify parameters associated with operation of the RPP 606, such as the number of retries that the RPP 606 can make. The RPP driver 526 may also be constrained to using a specific measurement system (e.g., metric units). These constraints may be implemented by the provider of the operating system 504. For example, the device driver 522 may be deemed incompatible with the operating system 504 unless the device driver 522 complies with the constraints.

Although not shown in Fig. 6, the RPP driver manager 516 may interface with multiple RPP drivers 526. For example, multiple different RPPs 606 may operate adjacent to the automated storage and retrieval system. For example, the different RPPs 606 may be RPPs 606 from the same manufacturer, but with different capabilities. As another example, the different RPPs 606 may be RPPs 606 from different manufacturers. In each case, however, each of the multiple RPP drivers 526 is written using the same constrained, pre-specified set of abstractions (e.g., as specified by the operating system provider). This ensures that the RPP drivers 526 of the different RPPs are all compatible with the operating system 504.

A manufacturer of a hardware component that is to be used adjacent to the automated storage and retrieval system can therefore write the device driver 522 for the hardware component using the constrained, pre-specified set of abstractions associated with that class of hardware component. By writing the device driver 522 using the constrained, pre-specified set of abstractions, compatibility between the operating system 504 and the hardware component is ensured. The hardware component vendor is therefore provided with a standardised system for writing the device driver 522. The device driver managers 512 use the standardised set of abstractions associated with the respective classes of hardware component when communicating with (i.e., providing instructions to) the device drivers 522.

The plurality of driver managers 512 therefore functions as an abstraction layer that allows different classes of hardware components to be "plugged in" to the operating system 504. This means that a hardware component manufacturer can write a device driver that allows an associated hardware component to be used with any AS/RS or warehouse system that implements the operating system 504. This greatly reduces the cost of integrating automation technology with the automated storage and retrieval system, in terms of monetary cost, time, and risk.

In use, the operating system 504 identifies the appropriate hardware for carrying out a particular task in the warehouse. After identifying the appropriate hardware for carrying out a particular task, the task may be routed to the device driver manager 512 that manages the device driver 522 associated with that hardware component. In one example, the appropriate hardware may be specified in a script executed by the MFH engine 510, or may alternatively be determined by the MFH engine 510 based on logical rules (e.g., based on product dimensions). For example, the MFH engine 510 may route a picking task for picking five smartphones to the RPP driver manager 516, which may then identify the appropriate RPP driver 526 associated with the RPP 606 that is to carry out the picking operation. In contrast, a picking task for picking a more fragile item may be routed to the AS/RS driver manager 514, which may then instruct the AS/RS driver 524 to provide instructions for a human operator to carry out the picking operation.

### Storage operations

As shown in Fig. 6, the operating system 504 is configured to access data stored in a data store 610 and to store data in the data store 610. In one example, the data store 610 is implemented as an on-premises SQL database. It will be appreciated, however, that the data store 610 may be implemented using other forms of persistent storage. The data store 610 stores information that allows the MFH engine 510 to generate tasks for the device driver managers 512. Therefore, the data store 610 may store details of the current inventory of the automated storage and retrieval system (e.g., the products stored in the automated storage and retrieval system and their locations within the automated storage and retrieval system), along with a catalogue of the products stored in the automated storage and retrieval system.

The MFH engine 510 uses the information stored in the data store 610 to translate the order received from the WxS 502 (i.e., via the API 508) into a plurality of tasks for the device driver managers 512 (which may including selecting the device driver manager 512 for each task). Each device driver manager 512 then translates the tasks received from the MFH engine 510 into instructions for its associated device driver(s) 522 using the set of abstractions associated with the class of hardware component controlled by the associated device driver(s) 522. Each device driver 522 then translates the instructions received from its associated device driver manager 512 into commands for controlling its associated hardware component (e.g., AS/RS hardware 602, RPP 606, etc.).

The data store 610 may also be used for storing tasks generated by the MFH engine 510. For example, certain hardware components may have limited storage capacity, thereby limiting the number of commands that can be stored at those hardware components. In this case, the operating system 504 throttles the rate of providing instructions to the device driver manager 512 associated with the hardware component's device driver 522 to a rate that the hardware component can handle. The data store 610 can be used to store tasks generated by the MFH engine 510, which can then be passed to the device driver managers 512 at an appropriate rate.

### Domain-specific language

As explained above, different warehouse systems typically involve different MFH processes, depending on how orders received at the warehouse are processed. This means that, for different warehouses, different sets of tasks are to be carried out upon receipt of an order. In order to cater for warehouse-specific MFH processes, the MFH engine 510 executes a script for the MFH workflow that is to be implemented in the warehouse (i.e., the warehouse in which the automated storage and retrieval system is installed). The script may be specific to a particular warehouse, or a particular entity (e.g., common to all warehouses operated by that entity).

The script executed by the MFH engine 510 is written using a domain-specific language (DSL). In one example, the DSL is specific to a warehouse domain, and therefore uses terminology and commands associated with warehouse elements and operations. In a more specific example, the DSL is specific to warehouses that include an automated storage and retrieval system. This means that the operations (verbs) and elements (nouns) referred to in the script are specific to the warehouse (and more particularly, to a warehouse including an automated storage and retrieval system).

The DSL used for writing the script includes restrictions on language. In particular, the operations and elements are restricted to operations and elements specific to the warehouse domain. For example, the DSL may comprise a restricted set of elements including, for example, container, port, tote and dolly. The DSL may further comprise a restricted set of operations including, for example, pick, induct, open and close.

The DSL implements an event-driven syntax, so that the script specifies what should happen in the warehouse when a certain event occurs (e.g., when an operator completes a pick, then move a container or tote to a particular location). The DSL may also implement constraints to prevent circular references and mistakes (e.g., to avoid defining an infinite loop), and constraints to prevent operations that are harmful or have a negative impact on security and/or operation in the warehouse environment. In one example, the operating system 504 implements a validation tool in order to validate a script prior to execution.

In addition, the DSL permits bulk definitions for a set of ports 130, 132 of the AS/RS hardware 602 (e.g., specifying a particular type of port 130, 132 of the AS/RS hardware 602, or particular actions to be carried out at those ports 130, 132), and permits bulk definitions for particular categories of tasks (e.g., specifying that all orders in a particular category are routed to a specified set of ports 130, 132).

One example of a portion of a script written using the DSL is given below:
when bin present in port:
start picking

In this example, the event is "bin present in port", and the task that is to be carried out in response to the event is "start picking". This task may then be translated into instructions for one or more of the plurality of device driver managers 512 by the MFH engine 510, so that the device driver manager(s) 512 can instruct their corresponding device driver(s) 522 to generate commands for their associated hardware component for carrying out the task (e.g., commands to provide on-screen instructions for an operator at a port 130, 132, or commands for a RPP 606 to begin picking).

By using a warehouse-specific DSL, the script executed by the MFH engine 510 can be written, understood, maintained and changed by the warehouse operator. This means that a warehouse operator can write a script that defines the MFH workflow to be implemented in their warehouse. In addition, providing a DSL with restricted semantics (i.e., a restricted set of elements and operations) ensures that a script written by a warehouse operator using the DSL is compatible with the MFH engine 510 of the operating system 504.

In one example, the MFH engine 510 executes a plurality of different scripts, where each script is specific to a particular workflow carried out in the warehouse. For example, the MFH engine 510 may execute one script for a goods retrieval workflow, and another, separate script for an induction workflow. Therefore, using the DSL, all physical events in the warehouse can be controlled.

As mentioned above, the use of a warehouse-specific DSL allows a warehouse operator to change the script, because the script can be understood by the warehouse operator. In the case where a script is modified by a warehouse operator, the MFH engine 510 pauses execution of the script, receives the modified script, and subsequently executes the modified script. For example, the modified script may result in the MFH engine 510 identifying a different plurality of tasks for the device driver managers 512 to those identified during execution of the initial script. The ability for warehouse operators to modify the script allows rapid changes in the MFH workflow to be implemented. In addition, the use of the warehouse-specific DSL allows modifications to be made to a script with greatly reduced monetary cost, time and risk (i.e., compared with modifications to source code used for hard-coded integration or modification of parameters).

Where multiple, different scripts are executed by the MFH engine 510, the modification of one of the scripts may be implemented without pausing execution of the other scripts. For example, if the MFH engine 510 executes a first script for a goods retrieval workflow and a second script for an induction workflow, then a modified goods retrieval script may be received and implemented by the MFH engine 510 without the MFH engine 510 pausing execution of the induction script. In other words, the MFH engine 510 may only pause execution of the script that is being modified.

In summary, therefore, the use of the DSL for a MFH workflow offers several benefits. First, communication between warehouse domain experts and software engineers is made more precise, because the DSL uses terminology and concepts familiar to experts in the warehouse domain, making it easier for non-programmers to understand and contribute to software development. Second, by providing constructs that directly map to warehouse domain concepts, the DSL reduces the amount of code required to implement functionality, thereby increasing productivity as less time is required to write and maintain the scripts. Third, by enforcing warehouse domain-specific constraints at the language level, the likelihood of errors is reduced, leading to software that is more reliable and of higher quality. Fourth, as business rules of domain concepts change over time, the DSL can be more easily adapted than, for example, a general purpose language. This adaptability makes maintaining and evolving the software more straightforward. Fifth, the DSL can be optimised for specific domain-related tasks, thereby offering better performance than, for example, general purpose languages. Sixth, the DSL components can be reused across multiple projects within the same domain, saving time and resources. Seventh, the DSL permits creation of warehouse domain-specific validation rules and frameworks, leading to more effective and efficient testing processes. Consequently, the DSL is advantageous for integrating automation equipment in a MFH workflow, because it streamlines communication between engineers and warehouse domain experts, and leads to more efficient and reliable software.

### Overview of petri net model

It will be appreciated that the scripts executed MFH engine 510 will include a large number of tasks that are to be carried out concurrently in the warehouse (i.e., by the automated storage and retrieval system and its adjacent hardware components). In particular, the large number of concurrent tasks involves a number of different subjects, such as robots 202, 204, human operators, automated machinery, conveyor belts, and so on. In order to cope with the requirement for concurrency of a large number of concurrent tasks, the MFH engine 510 implements a petri net mathematical model. The petri net mathematical model is particularly suited to highly concurrent systems, compared with, for example, a state machine model typically used to describe a workflow. State machine models are unsuitable for systems that require a high degree of concurrency. The petri net mathematical model is used to translate each script (written in the DSL) into an execution model for execution by the MFH engine 510. Specifically, the MFH engine 510 parses the script into an execution model using a petri net mathematical model.

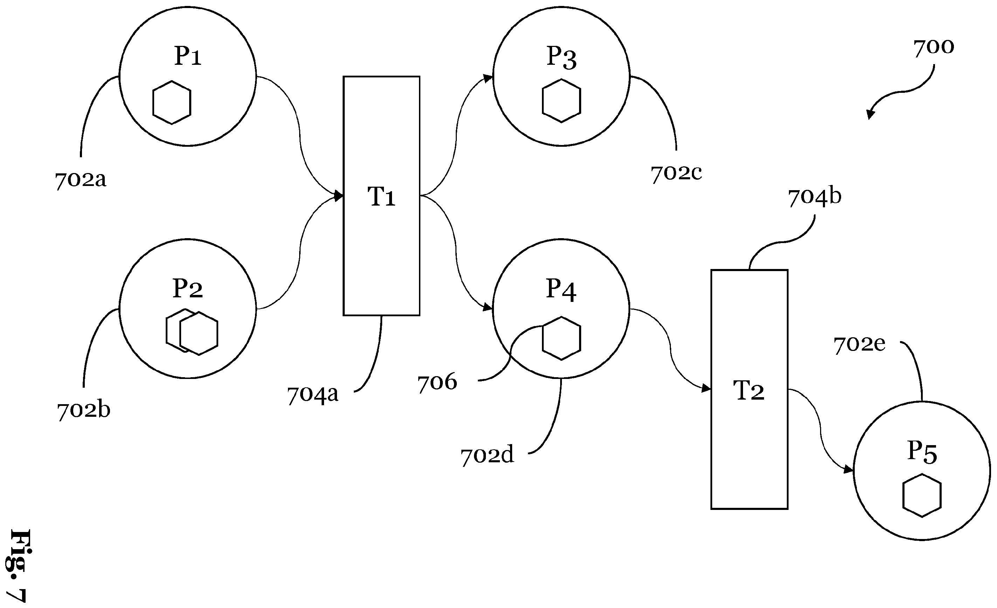

Fig. 7 shows a simplified schematic diagram of a petri net mathematical model 700. The petri net mathematical model shown in Fig. 7 includes a plurality of places 702 and a plurality of transitions 704. Specifically, a first transition 704a has, as inputs, a first place 702a and a second place 702b. The first transition 704a outputs to a third place 702c and a fourth place 702d. A second transition 704b has, as an input, the fourth place 702d, and outputs to a fifth place 702e.

A plurality of tokens 706 are also shown in Fig. 7. Each transition 'fires' if a token 706 is available at all of its input places 702. Therefore, the first transition 704a fires if a token 706 is available at the first place 702a and at the second place 702b. Likewise, the second transition 704b fires if a token 706 is available at the fourth place 702d. When the transitions 704 fire, they consume the tokens 706 from their input places 702 and create new tokens at their output places 702. Therefore, the first transition 704a consumes the tokens 706 from the first place 702a and the second place 702b, and creates new tokens at the third place 702c and at the fourth place 702d. Likewise, the second transition 704b consumes the token 706 from the fourth place 702d and creates a new token at the fifth place 702e.

Firing events in the petri net are nondeterministic, and multiple tokens 706 may be present anywhere in the petri net (even in the same place 702). In light of this, the petri net mathematical model 700 is well suited for modelling the concurrent behaviour of distributed systems, such as systems that implement MFH processes in warehouses.

### Implementation of petri net model

In the context of the operating system 504, a token 706 is a data structure such as a JSON or XML data structure. The data structure may be a single number, or a large amount of data. Each place 702 is a message broker queue, such as a First-In-First-Out (FIFO) message broker queue (although other forms of queue, such as Last-In-First-Out (LIFO) may alternatively be used, or the queues may alternatively be configurable). Each transition 704 is a portion of code that is to be executed. For example, the code may be associated with a particular task specified in the script being executed by the MFH engine 510. The availability of a token 706 in a place 702 corresponds to an event. The event that triggers a particular workflow is referred to as a workflow-initiating event.

As mentioned above, the DSL used for writing the script implements an event-driven syntax. An event is something that happens in a warehouse. Examples include: a bin 112 being presented to a port 130, 132; a parcel arriving at a packing station; a warehouse operator reporting for duty; a period of time elapsing; or a certain point in time (e.g., an alarm).

In addition, it is mentioned above that a script executed by the MFH engine 510 is specific to a particular workflow. Each workflow is modelled using a petri net mathematical model, such as the model schematically illustrated in Fig. 7. Therefore, the workflow specified by each script is translated into a petri net model 700. Each task in the workflow translates to a transition 704 of the petri net model 700. The workflow-initiating event that starts the workflow corresponds to the availability of a token 706 in a starting place 702 of the petri net model 700. The event that triggers a particular task corresponds to the availability of a token 706 in an input place 702 of the transition 704 corresponding to that particular task (or the availability of tokens 706 in each of the input places 702 of the transition 704, if the transition 704 has multiple input places 702).

It will be appreciated that modelling the workflows defined by the scripts using petri net models results in a large number of event handlers that are to be executed concurrently. In order to accommodate the concurrent execution of a large number of events, the MFH engine 510 utilises a plurality of cooperative threads (also known as "green threads" or "local threads"). Cooperative threads are threads running in the user space. Accordingly, the cooperative threads utilised by the MFH engine 510 run in the user space of the operating system 504 (in particular, in the user space of the one or more computing devices implementing the operating system 504).

Cooperative threads are utilised by the MFH engine 510 because they are lightweight, meaning that context switching between cooperative threads is very cheap, and because they can handle thousands of events at the same time. In contrast, concurrent execution of numerous event handlers cannot be easily implemented with traditional operating system processes or threads due to the overhead of context switching. In particular, although operating system threads are relatively lightweight (compared to, for example, operating system processes) and can handle multiple events in parallel, operating system threads are sufficiently heavy that thousands of operating system threads cannot be implemented concurrently. Accordingly, by implementing cooperative threads in user space, the MFH engine 510 can handle thousands of concurrent events.

### Flow diagrams

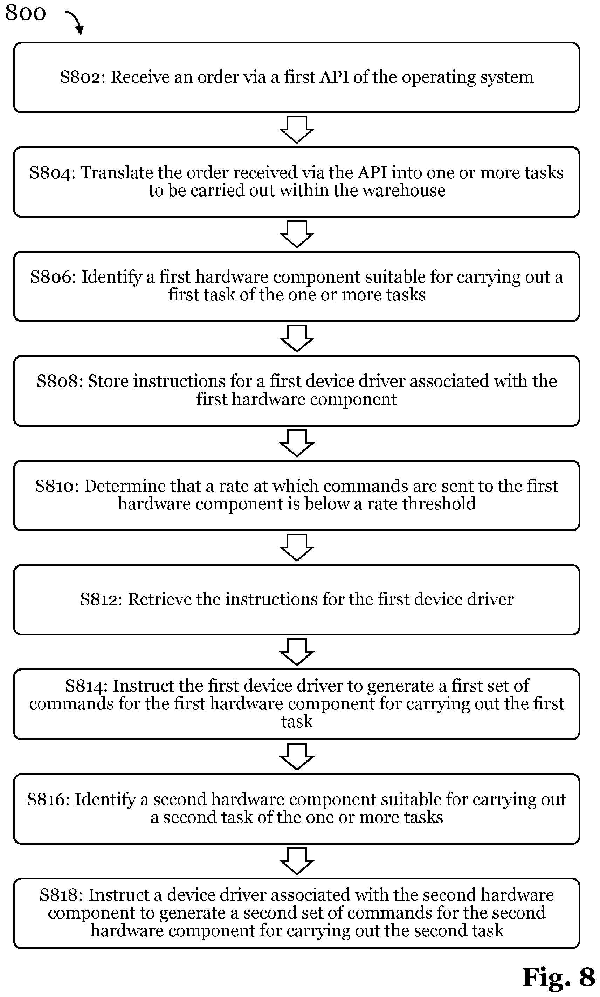

Fig. 8 is a flowchart of a method 800 carried out by the operating system 504 (which, as noted above, is an operating system of an automated storage and retrieval system installed in a warehouse). In particular, the method 800 may be implemented by one of more processors of one or more computing devices that implement the functionality of the operating system described above.

At 802, an order is received via the API 508 of the operating system 504. In particular, the order is received from a WxS 502, such as a WMS. The order may be, for example, a picking order (i.e., to pick goods stored in the automated storage and retrieval system) or an induction order (i.e., to induct goods stored into the automated storage and retrieval system).

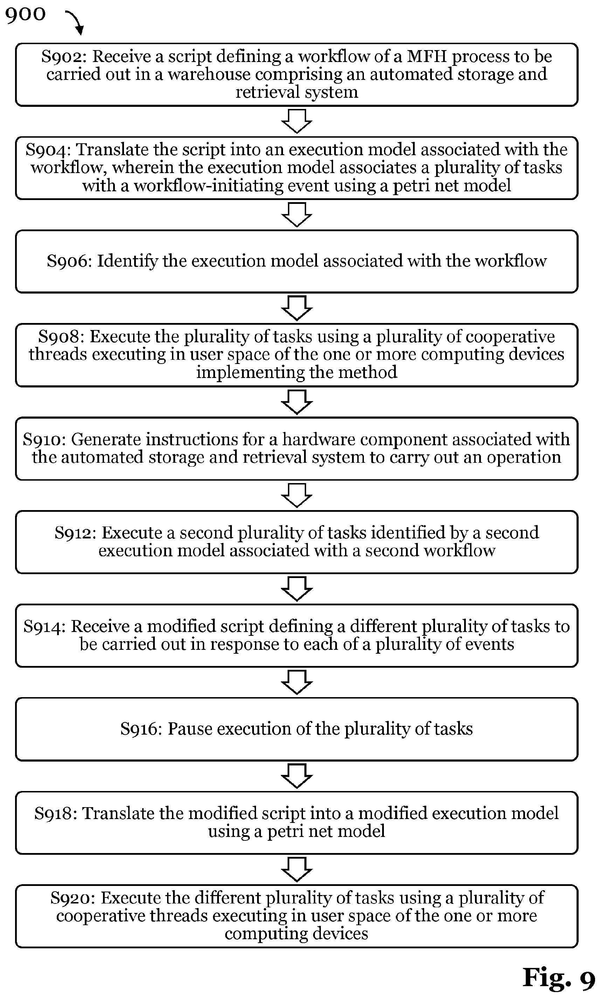

At 804, the operating system 504 translates the order received via the API 508 into one or more tasks to be carried out within the warehouse. The one or more tasks may be associated with a workflow defined by a script executed by the operating system 504 in response to a workflow-initiating event. For example, the receipt of an induction order at 802 may be a workflow-initiating event that initiates an induction workflow defined by the script. As explained below with reference to Fig. 9, identifying the one or more tasks at 804 may comprise identifying an execution model associated with the workflow, wherein the execution model identifies a plurality of tasks to be carried out in the warehouse in response to the workflow-initiating event.

At 806, the operating system 504 identifies a first hardware component suitable for carrying out a first task of the one or more tasks. The first hardware component is associated with the automated storage and retrieval system. For example, the first hardware component may be a hardware component of the automated storage and retrieval system, such as a port 130, 132 or a robot 202, 204. Alternatively, the first hardware component may be a hardware component operating adjacent to the automated storage and retrieval system, such as a RPP, AGV, AMR or conveyor.

Optionally, at 808, the operating system 504 stores, in the data store 510, instructions for a first device driver 522 (i.e., of the one or more device drivers 522) that is associated with the first hardware component. For example, if instructing the first device driver 522 would cause the rate of sending commands to the first hardware component to exceed a rate threshold, then the instructions for the first device driver 522 may be stored in the data store 510. This prevents overloading of the limited storage capacity of the first hardware component. Accordingly, the operating system 504 throttles the rate of providing instructions to the first device driver 522 to a rate that its associated hardware component can handle.

If the instructions for the first device driver 522 associated with the first hardware component are stored in the data store at 808, the operating system 504 may subsequently determine, at 810, that the rate at which commands are being sent to the first hardware component is below the rate threshold. In this case, the operating system 504 retrieves, at 812, the instructions for the first device driver 522 from the data store 510, so that the operating system 504 can send the instructions to the first device driver 522.

At 814, the operating system 504 instructs the first device driver 522 associated with the first hardware component to generate a first set of commands for the first hardware component for carrying out the first task. The first device driver 522 may then instruct, via a second API 604, 608, the first hardware component to carry out the first task using the first set of commands. The operating system 504 may instruct the first device driver 522 at 814 using a constrained set of abstractions used by the first device driver 522. In other words, the first device driver 522 may have been written (e.g., by a provider of the first hardware component) using the constrained set of abstractions, and the operating system 504 may instruct the first device driver 522 at 814 using the constrained set of abstractions used to write the first device driver 522.

The first device driver 522 instructed at 814 may be managed by a device driver manager 512 (i.e., of the one or more device driver managers 512) of the operating system 504. Therefore, instructing the first device driver 522 to generate the first set of commands at 814 may comprise instructing, by the device driver manager 512, the first device driver 522 to generate the first set of commands. The operating system 504 may include: a first device driver manager 512 configured to manage one or more device drivers 522 associated with a first class of hardware component (e.g., AS/RS hardware instances 602); and a second device driver manager 512 configured to manage one or more device drivers 522 associated with a second class of hardware component (e.g., RPPs 606) different to the first class of hardware component. The device drivers 522 associated with the first class of hardware component may use (i.e., be written using) a first constrained set of abstractions, while the device drivers 522 associated with the second class of hardware component may use (i.e., be written using) a second constrained set of abstractions different to the first constrained set of abstractions.

Optionally, at 816, the operating system 504 identifies a second hardware component suitable for carrying out a second task of the one or more tasks identified at 804. The second hardware component may also be associated with the automated storage and retrieval system. Where the first hardware component is a hardware component of the first class of hardware components (e.g., AS/RS hardware instances 602), the second hardware component may be a hardware component of the second class of hardware components (e.g., RPPs 606).

Where a second hardware component is identified at 816, the method 800 may further comprise instructing, at 818, a second device driver 522 (i.e., of the one or more device drivers 522) that is associated with the second hardware component. In particular, the second device driver 522 is instructed at 818 to generate a second set of commands for the second hardware component for carrying out the second task. As with the instructions for the first device driver 522, the instructions for the second device driver 522 may be throttled to a rate (e.g., using the process described at 808 to 812) that the second hardware component can handle, in order to accommodate any limited storage capacity of the second hardware component. The second device driver 522 may then instruct, via a third API 604, 608, the second hardware component to carry out the second task using the second set of commands.

Where the second hardware component identified at 816 is also a hardware component of the first class of hardware components (e.g., both identified hardware components belong to the same class, such as AS/RS hardware 602), the method 800 may comprise instructing the first device driver 522 at 818. Specifically, the first device driver 522 may be instructed to generate a second set of commands for the second hardware component for carrying out the second task. The first device driver 522 may then instruct, via the second API 604, 608, the second hardware component to carry out the second task using the second set of commands. In one example, the first hardware component may be associated with a first storage grid 100 of the automated storage and retrieval system, while the second hardware component is associated with a second storage grid 100 of the automated storage and retrieval system. In this way, the operating system 504 provides multi-grid support (i.e., the capability to provide commands to multiple AS/RS hardware instances 602 within a warehouse).

Fig. 9 is a flowchart of a method 900 carried out by the operating system 504 (which, as noted above, is an operating system of an automated storage and retrieval system installed in a warehouse). In particular, the method 900 may be implemented by one of more processors of one or more computing devices that implement the functionality of the operating system described above. Specifically, the method 900 may be implemented by the MFH engine 510 of the operating system 504 in order to carry out steps 804, 806 and 814 of the method 800.

Optionally, during initialisation of the operating system 504, a script may be received at the MFH engine 510 at 902. The script received at 902 may define a workflow of a MFH process to be carried out in the warehouse comprising the automated storage and retrieval system (e.g., an induction workflow). In particular, the script received at 902 may define a plurality of events including a workflow-initiating event that initiates the workflow, and one or more tasks that are to be carried out in response to each of the events. The events defined by the script received at 902 may include multiple concurrent events (i.e., events that occur concurrently, for example at different locations within the warehouse).

As mentioned above, the script received at 902 may be written using a domain-specific language that is specific to a warehouse domain. In particular, the domain-specific language may be specific to a domain of a warehouse that includes an automated storage and retrieval system. The domain-specific language may comprise a restricted set of elements and operations, and may utilise an event-driven syntax.

Optionally, during initialisation of the operating system 504, the MFH engine 510 may translate, at 904, the script received at 902 into an execution model associated with the workflow. In particular, the MFH engine 904 may parse the script received at 902 into an execution model that identifies a plurality of tasks to be carried out in the warehouse in response to the workflow-initiating event.

Specifically, the script received at 902 is translated into the execution model at 904 using a petri net mathematical model 700 comprising places 702, transitions 704 and tokens 706. For example, each task in the script received at 902 is translated to a transition 704 of the petri net model 700. Each transition has one or more input places 702 and one or more output places 702, implemented using message broker queues. An event is determined to have occurred if a token is available at each input place 702 of the transition 704 (i.e., if a data structure is present in each message broker queue corresponding to the one or more input places 702) of the transition 704. Where the event is determined to have occurred, the transition 704 fires, consuming the tokens in the input place(s) 702 of the transition 704 (i.e., data structures in the message broker queue(s) corresponding to the input place(s) 702), and creating one or more new tokens in the output place(s) 702 of the transition 704 (i.e., data structures in message broker queue(s) corresponding to the output place(s) 702). The availability of the one or more new tokens in the output place(s) 702 of the transition 704 may then cause further transitions 704 to fire.

At 906, during execution of the operating system 504, the MFH engine 510 identifies the execution model associated with the workflow (i.e., depending on the workflow-initiating event that has occurred). As mentioned above, the execution model associates the plurality of tasks with the workflow-initiating event using the petri net model 700.

At 908, the MFH engine 510 executes the plurality of tasks using a plurality of cooperative threads (also called "green threads" or "local threads") executing in user space of the one or more computing devices that implement the method 900. Executing the plurality of tasks at 908 may comprise executing multiple tasks concurrently.

For each of the plurality of tasks, executing the task at 908 may comprise generating, at 910, instructions for a hardware component associated with the automated storage and retrieval system to carry out an operation. The operating system 504 may instruct a device driver 522 associated with the hardware component using the instructions generated at 910. The hardware component may be a hardware component of the automated storage and retrieval system, such as a port 130, 132 or a robot 202, 204. Alternatively, the hardware component may be a hardware component operating adjacent to the automated storage and retrieval system, such as a RPP 606, AGV, AMR or conveyor.

In an alternative example, executing the task at 908 may comprise storing data, or making a call to a process.

Optionally, at 912, the MFH engine executes a second plurality of tasks identified by a second execution model associated with a second workflow. In particular, the second execution model may identify the second plurality of tasks that are to be carried out in the warehouse in response to a second workflow-initiating event, where the second execution model associates the plurality of tasks with the second workflow-initiating event using a petri net model 700. Executing the second plurality of tasks at 912 may comprise executing, using the plurality of cooperative threads, one or more of the plurality of tasks executed at 908 in parallel with one or more of the second plurality of tasks executed at 912.

Optionally, at 914, a modified script may be received at the MFH engine 510. The modified script received at 914 may define a modified workflow (e.g., a change to the induction workflow). Therefore, the modified script received at 914 may define one or more of a different plurality of tasks that are to be carried out in response to each of the plurality of events. The modified script received at 914 may be written using the same DSL used to write the script received at 902.

Where a modified script is received at 914, the MFH engine 510 pauses execution of the plurality of tasks at 916. Where a second plurality of tasks is executed at 912, the modified script received at 914 may relate to a modification to the workflow defining the plurality of tasks executed at 908. In this case, it may be possible to continue with the second workflow while the first workflow is paused. For example, a modified goods retrieval script may be received and implemented by the MFH engine 510 without the MFH engine 510 pausing execution of the induction workflow. Therefore, pausing execution of the plurality of tasks at 516 may comprise pausing execution of the plurality of tasks executed at 908 without pausing execution of the second plurality of tasks at 912.

The MFH engine 510 then translates, at 918, the modified script received at 514 into a modified execution model using a petri net model 700 (i.e., using the process described at 904), before executing, at 920, the different plurality of tasks using a plurality of cooperative threads executing in user space of the one or more computing devices 900 that implement the method 900.

### Variations and modifications

It will be appreciated that the petri net mathematical model 700 may also be used to translate a script that is not written using the DSL into an execution model for execution by the plurality of cooperative threads.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for processing a material flow handling operation in a warehouse comprising an automated storage and retrieval system, wherein the method is carried out using one or more processors of one or more computing devices, and wherein the method comprises:
identifying an execution model associated with a workflow, wherein the execution model identifies a plurality of tasks to be carried out in the warehouse in response to a workflow-initiating event, wherein the plurality of tasks are associated with the workflow-initiating event using a petri net model; and
executing the plurality of tasks using a plurality of cooperative threads executing in user space of the one or more computing devices.

2. The computer-implemented method of claim 1, wherein executing the plurality of tasks using the plurality of cooperative threads comprises executing two or more of the plurality of tasks concurrently.

3. The computer-implemented method of claim 1 or claim 2, wherein for each of the plurality of tasks, executing the task comprises generating instructions for a hardware component associated with the automated storage and retrieval system to carry out an operation.

4. The computer-implemented method of any of claims 1 to 3, further comprising:
receiving a script defining the workflow, wherein the script defines:
a plurality of events including the workflow-initiating event; and
one or more of the plurality of tasks that are to be carried out in response to each of the plurality of events.

5. The computer-implemented method of claim 4, further comprising translating the script into the execution model using the petri net model.

6. The computer-implemented method of claim 5, wherein each of the plurality of events is determined to have occurred in response to availability of a token of the petri net model in a place of the petri net model, wherein the place is an input to a transition of the petri net model, and wherein the transition is representative of one of the plurality of tasks.

7. The computer-implemented method of any of claims 4 to 6, wherein the plurality of events comprise two or more concurrent events.

8. The computer-implemented method of any of claims 4 to 7, wherein the script is written using a domain-specific language, wherein the domain-specific language is specific to a warehouse domain.

9. The computer-implemented method of claim 8, wherein the domain-specific language is specific to a domain of a warehouse comprising an automated storage and retrieval system.

10. The computer-implemented method of claim 8 or claim 9, wherein the domain-specific language comprises a restricted set of elements and operations.

11. The computer-implemented method of any of claims 8 to 10, wherein the domain-specific language is event driven.

12. The computer-implemented method of any of claims 4 to 11, further comprising:
receiving a modified script defining a modified workflow, wherein the modified script defines one or more of a different plurality of tasks that are to be carried out in response to each of the plurality of events;
pausing execution of the plurality of tasks;
translating the modified script into a modified execution model using a petri net model; and
executing the different plurality of tasks using a plurality of cooperative threads executing in user space of the one or more computing devices.

13. The computer-implemented method of any of claims 1 to 12, wherein the execution model is a first execution model, the workflow is a first workflow, the plurality of tasks is a first plurality of tasks, and the method further comprises:
executing a second plurality of tasks identified by a second execution model associated with a second workflow;
wherein executing the plurality of tasks using the plurality of cooperative threads comprises executing one or more of the first plurality of tasks in parallel with one or more of the second plurality of tasks.

14. The computer-implemented method of claim 13 when dependent on claim 12, wherein the modified script defines a modification to the first workflow, and wherein pausing execution of the plurality of tasks comprises pausing execution of the first plurality of tasks associated with the first workflow while continuing to execute the second plurality of tasks associated with the second workflow.

15. A computer-readable medium comprising instructions that, when executed by one or more processors of a computing device, cause the computing device to carry out the method of any of claims 1 to 14.

## Patentansprüche

1. Computerimplementiertes Verfahren zum Verarbeiten einer Materialfluss-Handhabungsoperation in einem Lager, umfassend ein automatisiertes Speicher- und Abrufsystem, wobei das Verfahren unter Verwendung eines oder mehrerer Prozessoren einer oder mehrerer Rechenvorrichtungen ausgeführt wird und wobei das Verfahren umfasst:
Identifizieren eines Ausführungsmodells, das mit einem Arbeitsablauf verknüpft ist, wobei das Ausführungsmodell eine Vielzahl von Aufgaben identifiziert, die in dem Lager als Reaktion auf ein Arbeitsablauf-initiierendes Ereignis auszuführen sind, wobei die Vielzahl von Aufgaben mit dem Arbeitsablauf-initiierenden Ereignis unter Verwendung eines Petrinetzmodells verknüpft ist; und
Ausführen der Vielzahl von Aufgaben unter Verwendung einer Vielzahl von kooperativen Threads, die im Benutzerraum der einen oder der mehreren Rechenvorrichtungen ausgeführt werden.

2. Computerimplementiertes Verfahren nach Anspruch 1, wobei das Ausführen der Vielzahl von Aufgaben unter Verwendung der Vielzahl von kooperativen Threads das gleichzeitige Ausführen von zwei oder mehr der Vielzahl von Aufgaben umfasst.

3. Computerimplementiertes Verfahren nach Anspruch 1 oder 2, wobei das Ausführen der Aufgabe für jede der Vielzahl von Aufgaben das Erzeugen von Anweisungen für eine Hardwarekomponente umfasst, die mit dem automatisierten Speicher- und Abrufsystem verknüpft ist, um eine Operation auszuführen.

4. Computerimplementiertes Verfahren nach einem der Ansprüche 1 bis 3, ferner umfassend:
Empfangen eines Skripts, das den Arbeitsablauf definiert, wobei das Skript definiert:
eine Vielzahl von Ereignissen einschließlich des Arbeitsablauf-initiierenden Ereignisses; und
eine oder mehrere der Vielzahl von Aufgaben, die als Reaktion auf jedes der Vielzahl von Ereignissen auszuführen sind.

5. Computerimplementiertes Verfahren nach Anspruch 4, ferner umfassend das Übersetzen des Skripts in das Ausführungsmodell unter Verwendung des Petrinetzmodells.

6. Computerimplementiertes Verfahren nach Anspruch 5, wobei bestimmt wird, dass jedes der Vielzahl von Ereignissen als Reaktion auf die Verfügbarkeit eines Tokens des Petrinetzmodells an einer Position im Petrinetzmodell aufgetreten ist, wobei die Position eine Eingabe in einen Übergang des Petrinetzmodells ist und wobei der Übergang repräsentativ für eine der Vielzahl von Aufgaben ist.

7. Computerimplementiertes Verfahren nach einem der Ansprüche 4 bis 6, wobei die Vielzahl von Ereignissen zwei oder mehr gleichzeitige Ereignisse umfasst.

8. Computerimplementiertes Verfahren nach einem der Ansprüche 4 bis 7, wobei das Skript unter Verwendung einer domänenspezifischen Sprache geschrieben wird, wobei die domänenspezifische Sprache spezifisch für eine Lagerdomäne ist.

9. Computerimplementiertes Verfahren nach Anspruch 8, wobei die domänenspezifische Sprache spezifisch für eine Domäne eines Lagers ist, umfassend ein automatisiertes Speicher- und Abrufsystem.

10. Computerimplementiertes Verfahren nach Anspruch 8 oder 9, wobei die domänenspezifische Sprache einen eingeschränkten Satz von Elementen und Operationen umfasst.

11. Computerimplementiertes Verfahren nach einem der Ansprüche 8 bis 10, wobei die domänenspezifische Sprache ereignisgesteuert ist.

12. Computerimplementiertes Verfahren nach einem der Ansprüche 4 bis 11, ferner umfassend:
Empfangen eines modifizierten Skripts, das einen modifizierten Arbeitsablauf definiert, wobei das modifizierte Skript eine oder mehrere einer anderen Vielzahl von Aufgaben definiert, die als Reaktion auf jedes der Vielzahl von Ereignissen auszuführen sind;
Anhalten der Ausführung der Vielzahl von Aufgaben;
Übersetzen des modifizierten Skripts in ein modifiziertes Ausführungsmodell unter Verwendung eines Petrinetzmodells; und
Ausführen der anderen Vielzahl von Aufgaben unter Verwendung einer Vielzahl von kooperativen Threads, die im Benutzerraum der einen oder der mehreren Rechenvorrichtungen ausgeführt werden.

13. Computerimplementiertes Verfahren nach einem der Ansprüche 1 bis 12, wobei das Ausführungsmodell ein erstes Ausführungsmodell ist, der Arbeitsablauf ein erster Arbeitsablauf ist, die Vielzahl von Aufgaben eine erste Vielzahl von Aufgaben ist und das Verfahren ferner umfasst:
Ausführen einer zweiten Vielzahl von Aufgaben, die durch ein zweites Ausführungsmodell identifiziert werden, das mit einem zweiten Arbeitsablauf verknüpft ist;
wobei das Ausführen der Vielzahl von Aufgaben unter Verwendung der Vielzahl von kooperativen Threads das Ausführen einer oder mehrerer der ersten Vielzahl von Aufgaben parallel zu einer oder mehreren der zweiten Vielzahl von Aufgaben umfasst.

14. Computerimplementiertes Verfahren nach Anspruch 13, falls abhängig von Anspruch 12, wobei das modifizierte Skript eine Modifikation des ersten Arbeitsablaufs definiert und wobei das Anhalten der Ausführung der Vielzahl von Aufgaben das Anhalten der Ausführung der ersten Vielzahl von Aufgaben, die mit dem ersten Arbeitsablauf verknüpft sind, umfasst, während das Ausführen der zweiten Vielzahl von Aufgaben, die mit dem zweiten Arbeitsablauf verknüpft sind, fortgesetzt wird.

15. Computerlesbares Medium, umfassend Anweisungen, die, wenn sie durch einen oder mehrere Prozessoren einer Rechenvorrichtung ausgeführt werden, die Rechenvorrichtung dazu veranlassen, das Verfahren nach einem der Ansprüche 1 bis 14 durchzuführen.

## Revendications

1. Procédé mis en œuvre par ordinateur pour traiter une opération de manipulation de flux de matériau dans un entrepôt comprenant un système automatisé de stockage et de récupération, dans lequel le procédé est effectué en utilisant un ou plusieurs processeurs d'un ou de plusieurs dispositifs informatiques, et dans lequel le procédé comprend :
l'identification d'un modèle d'exécution associé à un flux de travaux, dans lequel le modèle d'exécution identifie une pluralité de tâches devant être effectuées dans l'entrepôt en réponse à un événement amorceur de flux de travaux, dans lequel la pluralité de tâches sont associées à l'événement amorceur de flux de travaux en utilisant un modèle de réseau de Pétri ; et
l'exécution de la pluralité de tâches en utilisant une pluralité de fils coopératifs s'exécutant dans un espace utilisateur de l'un ou des plusieurs dispositifs informatiques.

2. Procédé mis en œuvre par ordinateur de la revendication 1, dans lequel l'exécution de la pluralité de tâches en utilisant la pluralité de fils coopératifs comprend l'exécution de deux ou de plus de deux de la pluralité de tâches simultanément.

3. Procédé mis en œuvre par ordinateur de la revendication 1 ou de la revendication 2, dans lequel, pour chacune de la pluralité de tâches, l'exécution de la tâche comprend la génération d'instructions pour un composant matériel associé au système automatisé de stockage et de récupération pour effectuer une opération.

4. Procédé mis en œuvre par ordinateur de quelconques des revendications 1 à 3, comprenant en outre :
la réception d'un script définissant le flux de travaux, dans lequel le script définit :
une pluralité d'événements incluant l'événement amorceur de flux de travaux ; et
une ou plusieurs de la pluralité de tâches qui doivent être effectuées en réponse à chacun de la pluralité d'événements.

5. Procédé mis en œuvre par ordinateur de la revendication 4, comprenant en outre la traduction du script en le modèle d'exécution en utilisant le modèle de réseau de Pétri.

6. Procédé mis en œuvre par ordinateur de la revendication 5, dans lequel il est déterminé que chacun de la pluralité d'événements a eu lieu en réponse à la disponibilité d'un jeton du modèle de réseau de Pétri dans un emplacement du modèle de réseau de Pétri, dans lequel l'emplacement est une entrée dans une transition du modèle de réseau de Pétri, et dans lequel la transition est représentative d'une de la pluralité de tâches.

7. Procédé mis en œuvre par ordinateur de quelconques des revendications 4 à 6, dans lequel la pluralité d'événements comprennent deux ou plus de deux événements simultanés.

8. Procédé mis en œuvre par ordinateur de quelconques des revendications 4 à 7, dans lequel le script est écrit en utilisant un langage spécifique de domaine, dans lequel le langage spécifique de domaine est spécifique à un domaine d'entrepôt.

9. Procédé mis en œuvre par ordinateur de la revendication 8, dans lequel le langage spécifique de domaine est spécifique à un domaine d'un entrepôt comprenant un système automatisé de stockage et de récupération.

10. Procédé mis en œuvre par ordinateur de la revendication 8 ou de la revendication 9, dans lequel le langage spécifique de domaine comprend un ensemble limité d'éléments et d'opérations.

11. Procédé mis en œuvre par ordinateur de quelconques des revendications 8 à 10, dans lequel le langage spécifique de domaine est guidé par événements.

12. Procédé mis en œuvre par ordinateur de quelconques des revendications 4 à 11, comprenant en outre :
la réception d'un script modifié définissant un flux de travaux modifié, dans lequel le script modifié définit une ou plusieurs d'une différente pluralité de tâches qui doivent être effectuées en réponse à chacun de la pluralité d'événements ;
l'interruption de l'exécution de la pluralité de tâches ; la traduction du script modifié en un modèle d'exécution modifié en utilisant un modèle de réseau de Pétri ; et
l'exécution de la différente pluralité de tâches en utilisant une pluralité de fils coopératifs s'exécutant dans un espace utilisateur de l'un ou des plusieurs dispositifs informatiques.

13. Procédé mis en œuvre par ordinateur de quelconques des revendications 1 à 12, dans lequel le modèle d'exécution est un premier modèle d'exécution, le flux de travaux est un premier flux de travaux, la pluralité de tâches est une première pluralité de tâches, et le procédé comprend en outre :
l'exécution d'une seconde pluralité de tâches identifiées par un second modèle d'exécution associé à un second flux de travaux ;
dans lequel l'exécution de la pluralité de tâches en utilisant la pluralité de fils coopératifs comprend l'exécution d'une ou de plusieurs de la première pluralité de tâches en parallèle avec une ou plusieurs de la seconde pluralité de tâches.

14. Procédé mis en œuvre par ordinateur de la revendication 13 lorsqu'elle dépend de la revendication 12, dans lequel le script modifié définit une modification pour le premier flux de travaux, et dans lequel l'interruption de l'exécution de la pluralité de tâches comprend l'interruption de l'exécution de la première pluralité de tâches associées au premier flux de travaux tout en continuant d'exécuter la seconde pluralité de tâches associées au second flux de travaux.

15. Support lisible par ordinateur, comprenant des instructions qui, lorsqu'elles sont exécutées par un ou plusieurs processeurs d'un dispositif informatique, amènent le dispositif informatique à effectuer le procédé de quelconques des revendications 1 à 14.
